# EUROPÄISCHE PATENTSCHRIFT

(11) **EP 3 765 769 B1**
(45) Veröffentlichungstag und Bekanntmachung des Hinweises auf die Patenterteilung: **09.03.2022**
(21) Anmeldenummer: 19706854.7
(22) Anmeldetag: 09.01.2019
(51) Int. Cl.: F16H 57/12, F16H 55/14, F16H 55/18

(54) **ZAHNRADGETRIEBE**
GEAR TRANSMISSION
ENGRENAGE À ROUES DENTÉES

(30) Priorität: 16.01.2018 AT 500262018
(43) Veröffentlichungstag der Anmeldung: 20.01.2021
(73) Patentinhaber: High Tech Coatings GmbH, 4663 Laakirchen (AT)
(72) Erfinder: GASPERLMAIR, Thomas, 4664 Oberweis (AT); EITZINGER, Günter, 4850 Timelkam (AT)
(74) Vertreter: Burger, Hannes
(86) Internationale Anmeldenummer: PCT/AT2019/060007
(87) Internationale Veröffentlichungsnummer: WO 2019/140469

(56) Entgegenhaltungen:
- WO-A1-2014/071004
- DE-A1- 2 502 323
- DE-A1- 3 827 871
- DE-A1-102011 017 337

## Beschreibung

Die Erfindung betrifft ein Zahnradgetriebe umfassend ein erstes Zahnrad mit einer ersten Verzahnung, ein zweites Zahnrad mit einer zweiten Verzahnung und ein drittes Zahnrad mit einer dritten Verzahnung, wobei das dritte Zahnrad zwischen dem ersten und dem zweiten Zahnrad angeordnet ist und die dritte Verzahnung im kämmenden Eingriff mit der ersten und der zweiten Verzahnung steht, wobei weiter das dritte Zahnrad drehbar auf einem Lagerbolzen mittels eines Lagerelementes gelagert ist, und sich der Lagerbolzen durch einen Durchbruch in einer Wand hindurch erstreckt.

Weiter betrifft die Erfindung ein Verfahren zur Montage eines Zahnradgetriebes umfassend ein erstes Zahnrad mit einer ersten Verzahnung, ein zweites Zahnrad mit einer zweiten Verzahnung und ein drittes Zahnrad mit einer dritten Verzahnung, wobei ein Lagerbolzen durch einen Durchbruch einer Wand und das dritte Zahnrad hindurch gesteckt wird oder das dritte Zahnrad auf den Lagerbolzen aufgesteckt wird, und mittels eines Lagerelementes auf dem Lagerbolzen drehbar gelagert wird, wobei der Durchbruch so ausgebildet wird, dass das dritte Zahnrad zwischen dem ersten und dem zweiten Zahnrad angeordnet wird und die dritte Verzahnung im kämmenden Eingriff mit der ersten und der zweiten Verzahnung gebracht wird.

Aus der DE 10 2011 017 337 A1 ist ein Verbrennungsmotor mit einem Gehäuse, einer Kurbelwelle mit einem Zahnrad, mindestens einer Ausgleichswelle mit einem Zahnrad und einem das Zahnrad der Kurbelwelle mit dem Zahnrad der Ausgleichswelle verbindenden Zwischenrad bekannt. Das Zwischenrad ist drehbar auf einem Lagerbolzen gelagert, der radial verschiebbar in dem Gehäuse gelagert und daran fixierbar ist. Weiter beschreibt diese Druckschrift ein Verfahren zur Montage eines derartigen Verbrennungsmotors, nach dem das Zwischenrad radial in einer Richtung, die mittig zwischen den beiden Kontaktmittelpunkten, die das Zwischenrad mit den angrenzenden Zahnrädern bildet, verläuft, mit einer definierten Kraft beaufschlagt und der Lagerbolzen daraufhin an dem Gehäuse fixiert wird.

Für die Einstellung des Zahnflankenspiels wird also eine definierte Kraft benötigt. Diese wird häufig von einer externen Aktuatorik erzeugt, die das Zwischenrad in einem genauen Winkel und mit der definierten Kraft gegen die beiden anderen Zahnräder drückt. Die Montage ist damit zeitaufwändiger. Zudem ist die Aktuatorik kostenintensiv.

Der vorliegenden Erfindung liegt die Aufgabe zugrunde, die Einstellung des Zahnflankenspiels in einem Zahnradgetriebe mit zumindest drei miteinander kämmenden Zahnrädern zu vereinfachen.

Diese Aufgabe wird mit einem Zahnradgetriebe gelöst, das die Merkmale des Anspruchs 1 aufweist.

Weiter wird die Aufgabe der Erfindung auch mit einem Verfahren gelöst, das die Merkmale des Anspruchs 6 aufweist.

Von Vorteil ist dabei, dass für die Montage des Zahnradgetriebes eine vorgefertigte Zahnrad-Lagerelement-Federelement Einheit zur Verfügung gestellt werden kann, die einfach auf den Lagerbolzen aufgeschoben bzw. in die der Lagerbolzen eingeschoben werden kann. Mit Hilfe des Federelementes wird das dritte Zahnrad gegen die beiden anderen Zahnräder gedrückt, sodass beispielsweise für die Einstellung des Zahnflankenspiels der kämmenden Zahnräder keine weitere Kraft mehr von außen, beispielsweise über die genannte Aktuatorik, für das Anpressen des dritten Zahnrades erforderlich ist. Es kann damit die Einstellung des Zahnflankenspiels deutlich vereinfacht werden, wodurch entsprechende Zeit- und Kostenvorteile in der Montagelinie von derartigen Zahnradgetrieben erreicht werden können. Es kann weiter vorgesehen sein, dass zur Vermeidung der Beschädigung einer gegebenenfalls vorhandenen Beschichtung lastfrei aufgeschoben wird. Generell kann mit dem Verfahren das Aufschieben eines beschichteten Bolzens oder eines beschichteten Zahnrades verbessert werden, beispielsweise eines Bolzens oder eines Zahnrades, der oder das eine adaptive Beschichtung aufweist, wie sie z.B. in der WO 2012/151604 A1 oder der WO 2012/151603 A1 beschrieben sind. Nach einer Ausführungsvariante des Zahnradgetriebes kann vorgesehen sein, dass das Federelement hülsenförmig ausgebildet ist. Es kann damit die Handhabung der Zahnrad-Lagerelement-Federelement Einheit vereinfacht werden, da durch die Hülsenform des Federelementes dieses nicht mehr so einfach verrutschen kann. Zudem gibt es damit keine Vorzugsrichtung des Federelementes, womit es in jeder Lage - auf den Umfang bezogen - in das Zahnradgetriebe eingebaut werden kann.

Es ist weiter möglich, das Federelement hyperboloidförmig auszubilden. Diese Ausbildung des Federelementes hat neben der Hülsenform zusätzlich den Vorteil, dass die Seitenbereiche am Lagerelement anliegen, wodurch eine einfache Möglichkeit zur Zentrierung des dritten Zahnrades geschaffen wird. Damit kann ein Verkanten bzw. Verkippen des dritten Zahnrades beim Zustellen zu den beiden anderen Zahnrädern besser vermieden werden.

Gemäß einer weiteren Ausführungsvariante des Zahnradgetriebes kann vorgesehen sein, dass das Federelement zumindest einen Schlitz aufweist. Es kann damit eine einfache Einstellmöglichkeit hinsichtlich der Anpresskraft, die auf das dritte Zahnrad ausgeübt wird, geschaffen werden, sodass das einzustellende Zahnflankenspiel besser an die konkret eingesetzten Verzahnungen angepasst werden kann.

Zur einfacheren Montage des dritten Zahnrades und zum gleichzeitigen fixieren in der gewünschten Relativstellung zu den beiden anderen Zahnrädern kann vorgesehen sein, dass das Federelement mit einer Schraubenmutter verbunden ist, mit der der Lagerbolzen an der Wand fixierbar ist. Durch die Verbindung des Federelementes mit der Schraubenmutter kann zudem eine exaktere Positionierung des Federelementes zwischen dem Lagerbolzen und dem Lagerelement erreicht werden.

Nach einer Ausführungsvariante des Verfahrens kann vorgesehen sein, dass der Durchbruch für den Lagerbolzen in der Wand so positioniert wird, dass sich der Teilkreis der dritten Verzahnung mit den Teilkreisen der ersten und der zweiten Verzahnung schneidet. Dem Federelement kann damit eine höhere Verformung bei der Montage des dritten Zahnrades im Zahnradgetriebe verliehen werden. Es kann damit über diesen Weg ebenfalls die Anpresskraft in gewissen Grenzen variiert werden, indem die Überschneidung der Teilkreise je nach Zahnradgetriebe variiert wird. Damit kann das System flexibler ausgebildet werden. Darüber hinaus hat diese Ausführungsvariante den Vorteil, dass es möglich ist, dass das dritte Zahnrad nach der Einstellung des Zahnflankenspiels im Wesentlichen unbelastet mit den beiden anderen Zahnrädern kämmt, wodurch der Achsabstand präziser eingestellt damit das Geräuschverhalten und/oder, gegebenenfalls in Verbindung mit einer adaptiven Schicht, das Tragbild des Zahnradgetriebes verbessert werden können.

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einem Zahnradgetriebe in Frontansicht;
- Fig. 2: einen Ausschnitt aus dem Zahnradgetriebe nach Fig. 1 im Querschnitt;
- Fig. 3: eine Ausführungsvariante eines Federelementes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

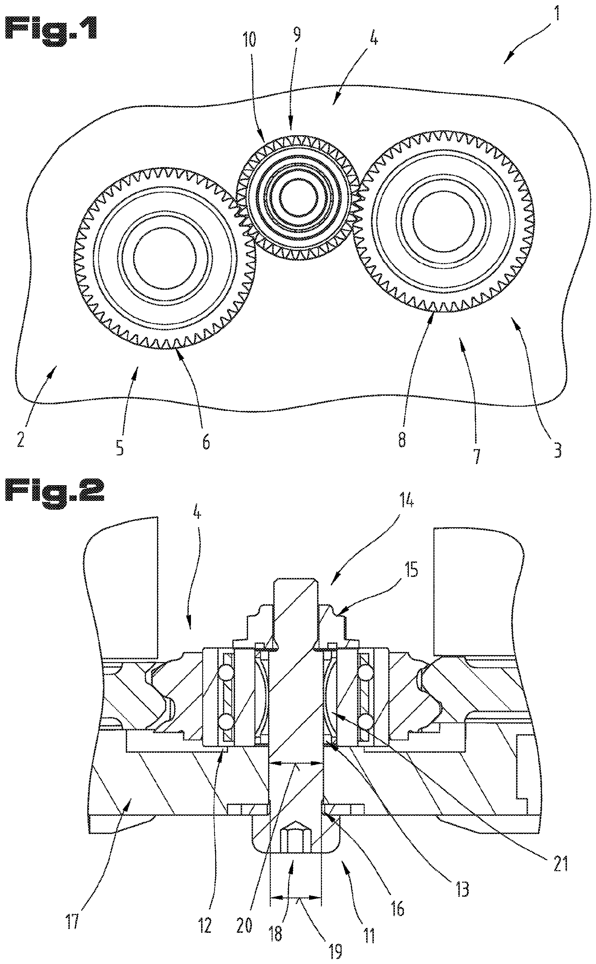

In Fig. 1 ist ein Ausschnitt aus einem Zahnradgetriebe 1 vereinfacht dargestellt. Das Zahnradgetriebe umfasst ein erstes Zahnrad 2, ein zweites Zahnrad 3 und ein drittes Zahnrad 4.

Das erste Zahnrad 2 weist eine erste Verzahnung 5 mit ersten Zähnen 6 auf.

Das zweite Zahnrad 3 weist eine zweite Verzahnung 7 mit zweiten Zähnen 8 auf.

Das dritte Zahnrad 4 weist eine dritte Verzahnung 9 mit dritten Zähnen 10 auf.

Das dritte Zahnrad 4 ist zwischen dem ersten Zahnrad 2 und dem zweiten Zahnrad 3 angeordnet, sodass dessen Zähne 10 in kämmenden Eingriff mit den Zähnen 6 des ersten Zahnrades 2 und den Zähnen 8 des zweiten Zahnrades 8 stehen.

Das erste, das zweite und das dritte Zahnrad 2-4 sind entsprechend drehbar auf Achsen angeordnet.

Das Zahnradgetriebe 1 ist insbesondere Teil eines Verbrennungsmotors, wobei das erste Zahnrad 2 auf einer Kurbelwelle und das zweite Zahnrad 3 auf einer Ausgleichswelle angeordnet sein können. Das dritte Zahnrad 4 bildet ein Zwischenrad um damit eine gleichgerichtete Drehung des ersten und des zweiten Zahnrades 2, 3 zu erreichen.

Wie besser aus Fig. 2 zu ersehen ist, wird die Achse des dritten Zahnrades 4 durch einen Lagerbolzen 11 gebildet. Damit das dritte Zahnrad 4 frei drehbar auf dem Lagerbolzen 11 angeordnet werden kann, ist zwischen dem dritten Zahnrad 4 und dem Lagerbolzen 11 ein Lagerelement 12 angeordnet. Im konkreten Ausführungsbeispiels ist das Lagerelement 12 in radialer Richtung unterhalb des dritten Zahnrades 4 und oberhalb des Lagerbolzens 11 angeordnet. Weiter ist das Lagerelement 12 in der dargestellten Ausführungsvariante ein Kugellager, das insbesondere eine axiale Länge aufweist, die zumindest annähernd der axialen Länge des dritten Zahnrades 4 entspricht.

Das Lagerelement 12 kann in axialer Richtung aber auch länger oder kürzer sein, als das dritte Zahnrad 4.

Der Lagerbolzen 11 kann einen Schaftbereich 13 aufweisen, der eine glatte Oberfläche hat. Bevorzugt ist in diesem Schaftbereich 13 ist das dritte Zahnrad 4 angeordnet.

Weiter weist der Lagerbolzen 11 insbesondere einen Endbereich 14 auf, der mit einem Außengewinde versehen sein kann. Es ist damit möglich, in diesem Endbereich 14 eine Schraubenmutter 15 vorzusehen, mit der der Lagerbolzen 11 fixiert werden kann. Für diese Fixierung kann der Lagerbolzen 11 durch einen Durchbruch 16 in einer Wand 17 geführt sein. Wird nun die Schraubenmutter 15 angezogen, wird ein Kopf 18 des Lagerbolzens 11 gegen die Wand gepresst und damit der Lagerbolzen kraft- und reibschlüssig fixiert.

Die Wand 17 kann beispielsweise eine Gehäusewand eines Getriebegehäuses sein.

Der Schaftbereich 13 des Lagerbolzens 11 kann gegenüber dessen Endbereich 14 abgesetzt sein, wie dies in Fig. 2 dargestellt ist. Beispielsweise kann der Endbereich 14 einen kleineren Durchmesser aufweisen, als der Schaftbereich 13

Der Durchbruch 16 in der Wand 17 weist einen Durchmesser 19 auf, der einem Außendurchmesser 20 des Lagerbolzens 11 im Schaftbereich 13 zumindest annähernd entspricht. Mit zumindest annähernd ist dabei gemeint, dass der Durchmesser 19 des Durchbruchs 16 gerade so groß ist, dass der Lagerbolzen 11 durchgesteckt werden kann. Der Durchmesser 19 ist jedoch nicht so groß, dass der Lagerbolzen eine nennenswerte radiale Beweglichkeit im Durchbruch 16 hat. Der Lagerbolzen 11 kann also auch als fixe Achse bezeichnet werden. Er liegt fest und radial unveränderlich in dem Durchbruch 16 der Wand 17. Anders ausgedrückt ist der Durchmesser 19 des Durchbruchs 16 passgenau auf den Außendurchmesser 20 des Lagerbolzens 11 abgestimmt.

Insbesondere ist der Außendurchmesser 20 des Lagerbolzens 11 im Schaftbereich 13 genau so groß wie der Durchmesser 19 des Durchbruchs 16.

Wie weiter aus Fig. 2 ersichtlich ist, ist zwischen dem Lagerbolzen 11 und dem Lagerelement 12 zumindest ein Federelement 21 angeordnet. Insbesondere ist das zumindest eine Federelemente 21 in radialer Richtung unterhalb des Lagerelementes 12 und oberhalb das Lagerbolzens 11 angeordnet. Vorzugsweise liegt das Lagerelement 12 und/oder der Lagerbolzen 11 unmittelbar an dem Federelement 21 an.

Mit dem Federelement 21 kann erreicht werden, dass die dritten Zähne 10 der dritten Verzahnung 9 des dritten Zahnrades 4 gegen die ersten Zähne 6 der ersten Verzahnung 7 des ersten Zahnrades 2 und gegen die zweiten Zähne 8 der zweiten Verzahnung 7 des zweiten Zahnrades 3 gedrückt wird.

Dieser Effekt wird vorzugsweise zur Einstellung eines Zahnflankenspiels der mit der dritten Verzahnung 9 kämmenden ersten und zweiten Verzahnungen 5 und 7. Dazu kann vorgesehen sein, dass die dritten Zähne 10, insbesondere zumindest ein Teil der Zahnflanken der dritten Zähne 10, und/oder die ersten und zweiten Zähne 6, 8, insbesondere ein Teil der Zahnflanken der ersten und zweiten Zähne 6, 8, mit einer abreibbaren und/oder adaptiven Beschichtung versehen sind. Alternativ kann auch eine (zumindest teilweise) abreibbare Schicht aufgetragen sein, die nicht notwendigerweise als Beschichtung an sich aufgetragen ist, sondern beispielsweise auch aufgeklebt oder anderweitig gefügt sein kann.

Eine derartige abreibbare Beschichtung zur Einstellung des Zahnflankenspiels ist aus dem Stand der Technik, beispielsweise der WO 02/48575 A2, bekannt, sodass nicht näher darauf eingegangen werden muss. Es sei nur so viel erwähnt, dass sich diese Beschichtung relativ rasch, d.h. innerhalb des Einlaufs der Zahnräder 2-4, abreibt, wodurch das Zahnflankenspiel entsteht. Die Schichtdicke dieser Beschichtung bzw. Schicht entspricht daher insbesondere der Größe des gewünschten Zahnflankenspiels. Wenn beide miteinander kämmenden Zahnräder beschichtet sind, entspricht die Schichtstärke nur der Hälfte bzw. einem Bruchteil des gewünschten Zahnflankenspiels.

Für die Montage des Zahnradgetriebes 1 werden u.a. das erste und das zweite Zahnrad 2, 3 auf den entsprechenden Achsen vormontiert. Danach wird der Lagerbolzen 11 von außen in das Gehäuse durch den Durchbruch 16 in der Wand 17 geführt und darauf das dritte Zahnrad 4 als vormontierte Baueinheit aufgeschoben. Diese Reihenfolge der Montage kann aber auch umgedreht werden, indem zuerst das dritte Zahnrad eingelegt und danach der Lagerbolzen 11 durch das Gehäuse und die Federelement 21 - Lagerelement 12 Gruppe gesteckt wird.

Das einzubauende dritte Zahnradrad 4 ist auf dem Lagerelement 12 angeordnet, insbesondere dem Kugellager, an dessen Innenring das Federelement 21 angeordnet ist. Diese Zahnrad-Lager-Federeinheit wird auf den Lagerbolzen 11 aufgefädelt. Das Federelement 21 übet in der Folge eine Kraft in Richtung der Achsen des ersten Zahnrades 2 und des zweiten Zahnrades 3 aus. Diese Kraft ist abhängig von der Geometrie des Federelements 21 sowie von dessen Werkstoff und kann somit in weiten Bereichen angepasst werden. Dann wird die Zahnrad-Lager-Federeinheit mittels der Schraubenmutter 15 auf dem Lagerbolzen 11 verschraubt, sodass über Reibschluss zwischen Wälzlagerinnenring und Gehäuse einerseits, zwischen Wälzlagerinnenring und der Schraubenmutter 15/Unterlagscheibe andererseits die Zahnrad-Lagereinheit fix positioniert ist und sich der Lagerbolzen 11 auch im Betrieb nicht mehr bewegen kann.

Nur der Vollständigkeit halber sei angemerkt, dass der Durchbruch 16 selbstverständlich so in der Wand positioniert werden muss, dass das dritte Zahnrad 4 zwischen dem ersten und dem zweiten Zahnrad 2, 3 angeordnet werden und die dritte Verzahnung 9 in kämmenden Eingriff mit der ersten und der zweiten Verzahnung 5, 7 gebracht werden kann.

Wie bereits erwähnt, kann das Federelement sowohl hinsichtlich Geometrie als auch hinsichtlich verwendetem Werkstoff unterschiedlich ausgestaltet sein.

Als Werkstoffe können beispielsweise polymere und/oder metallische Werkstoffe eingesetzt werden. Das Federelement 21 kann weiter einstückig oder als Compositwerkstoff ausgebildet sein. Ebenso sind beispielsweise mehrlagig ausgebildete Federelemente 21 verwendbar.

Es können auch mehr als ein Federelement 21 eingesetzt werden, die beispielsweise über den Umfang des Lagerbolzens 11 im Schaftbereich 12 verteilt angeordnet werden.

Vorzugsweise ist das Federelement 21 allerdings hülsenförmig ausgebildet.

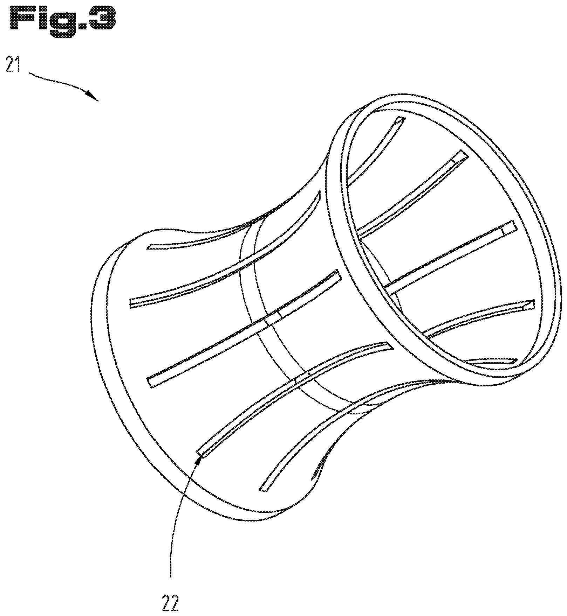

In Fig. 3 ist eine Ausführungsvariante eines derartigen Federelementes 21 dargestellt. Das Federelement 21 ist hyperboloidförmig ausgebildet, sodass also ein Mittenbereich einen kleineren Durchmesser aufweist, als die beiden Endbereiche. Damit liegt dieses Federelement 21 im Mittenbereich an dem Lagerbolzen 11 und in den Endbereichen an dem Lagerelement 12 an, wie dies aus Fig. 2 zu ersehen ist.

Wie weiter aus Fig. 3 zu ersehen ist, kann das Federelement zur Einstellung der auszuübenden Kraft zumindest einen Schlitz 22 aufweisen. Es können mehrere Schlitze 22 vorgesehen werden, die insbesondere gleichförmig über den Umfang des Federelementes 21 verteilt angeordnet sind.

Der oder die Schlitze 22 kann oder können sich insbesondere in der Längsrichtung des Federelementes 21, also in Richtung der Axialrichtung des Lagerbolzens 11, erstrecken. Sie können aber auch schräg dazu verlaufend oder spiralförmig verlaufend ausgebildet werden.

Neben der hyperboloidförmigen Ausbildung kann das Federelement 21 beispielsweise auch tonnenförmig ausgebildet sein. Es kann weiter vorgesehen sein, dass das Federelement 21 Federzungen aufweist, die gegen das Lagerelement 12 oder den Lagerbolzen 11 drücken.

Nach einer weiteren Ausführungsvariante kann vorgesehen sein, dass das Federelement 21 mit der Schraubenmutter 15 verbunden ist, mit der der Lagerbolzen 11 an der Wand 17 fixierbar ist.

Es kann auch vorgesehen sein, der Durchbruch 16 für den Lagerbolzen 11 in der Wand 17 so positioniert wird, dass sich der Teilkreis der dritten Verzahnung 9 mit den Teilkreisen der ersten und der zweiten Verzahnung 5, 7 schneidet. Durch den zu geringen Abstand der Zahnradachsen wird das Federelement 21 zwischen dem Lagerelement 12 und dem Lagerbolzen 11 verformt und übt so eine höhere Kraft in Richtung der Achsen des ersten Zahnrades 2 und des zweiten Zahnrades 3 aus.

Der Begriff Teilkreis wird dem üblichen Sprachgebrauch für Verzahnungen entsprechend der Definition in der DIN 3960 (in der Fassung zum Erstanmeldetag gegenständlicher Erfindung) verwendet.

Die Ausführungsbeispiele zeigen bzw. beschreiben mögliche Ausführungsvarianten, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus das Zahnradgetriebe bzw. dessen Bestandteile nicht zwingenderweise maßstäblich dargestellt wurden.

### Bezugszeichenaufstellung

- 1: Zahnradgetriebe
- 2: Zahnrad
- 3: Zahnrad
- 4: Zahnrad
- 5: Verzahnung
- 6: Zahn
- 7: Verzahnung
- 8: Zahn
- 9: Verzahnung
- 10: Zahn
- 11: Lagerbolzen
- 12: Lagerelement
- 13: Schaftbereich
- 14: Endbereich
- 15: Schraubmutter
- 16: Durchbruch
- 17: Wand
- 18: Kopf
- 19: Durchmesser
- 20: Außendurchmesser
- 21: Federelement
- 22: Schlitz

## Patentansprüche

1. Zahnradgetriebe (1) umfassend ein erstes Zahnrad (2) mit einer ersten Verzahnung (5), ein zweites Zahnrad (3) mit einer zweiten Verzahnung (7) und ein drittes Zahnrad (4) mit einer dritten Verzahnung (9), wobei das dritte Zahnrad (4) zwischen dem ersten und dem zweiten Zahnrad (2, 3) angeordnet ist und die dritte Verzahnung (9) in kämmenden Eingriff mit der ersten und der zweiten Verzahnung (5, 7) steht, wobei weiter das dritte Zahnrad (4) drehbar auf einem Lagerbolzen (11) mittels eines Lagerelementes (12) gelagert ist, und sich der Lagerbolzen (11) durch einen Durchbruch (16) in einer Wand (17) hindurch erstreckt, wobei das Lagerelement (12) als Wälzlager mit einem Wälzlagerinnenring ausgebildet ist, und über Reibschluss zwischen dem Wälzlagerinnenring und der Wand (17) einerseits und zwischen Wälzlagerinnenring und der Schraubenmutter (15) oder einer zwischen der Schraubenmutter (15) und dem Wälzlagerinnenring angeordneten Unterlagscheibe andererseits der Wälzlagerinnenring fix positioniert ist, **dadurch gekennzeichnet, dass** ein Durchmesser (19) des Durchbruchs (16) passgenau auf eine Außendurchmesser (20) des Lagerbolzens (11) abgestimmt ist, sodass der Lagerbolzen (11) radial unveränderlich in dem Durchbruch (16) der Wand (17) festliegt, und dass zwischen dem Lagerbolzen (11) und dem Lagerelement (12) ein Federelement (21) angeordnet ist, und dass die Einheit aus drittem Zahnrad (4), Lagerelement (12) und Federelement (21) mittels einer Schraubenmutter (15) auf dem Lagerbolzen (11) zur Ausbildung des Reibschlusses zwischen dem Wälzlagerinnenring und der Wand (17) und zwischen Wälzlagerinnenring und der Schraubenmutter (15) oder einer zwischen der Schraubenmutter (15) und dem Wälzlagerinnenring angeordneten Unterlagscheibe verschraubt ist.

2. Zahnradgetriebe (1) nach Anspruch 1, **dadurch gekennzeichnet, dass** das Federelement (21) hülsenförmig ausgebildet ist.

3. Zahnradgetriebe (1) nach Anspruch 1 oder 2, **dadurch gekennzeichnet, dass** das Federelement (21) hyperboloidförmig ausgebildet ist.

4. Zahnradgetriebe (1) nach einem der Ansprüche 1 bis 3, **dadurch gekennzeichnet, dass** das Federelement (21) zumindest einen Schlitz (22) aufweist.

5. Zahnradgetriebe (1) nach einem der Anspruche 1 bis 4, **dadurch gekennzeichnet, dass** das Federelement (21) mit der Schraubenmutter (15) verbunden ist, mit der der Lagerbolzen (11) an der Wand (17) fixierbar ist.

6. Verfahren zur Montage eines Zahnradgetriebes (1) umfassend ein erstes Zahnrad (2) mit einer ersten Verzahnung (5), ein zweites Zahnrad (3) mit einer zweiten Verzahnung (7) und ein drittes Zahnrad (4) mit einer dritten Verzahnung (9), wobei ein Lagerbolzen (11) durch einen Durchbruch (16) einer Wand (17) und das dritte Zahnrad (4) hindurch gesteckt wird oder das dritte Zahnrad (4) auf den Lagerbolzen (11) aufgesteckt wird, und mittels eines Lagerelementes (12) auf dem Lagerbolzen (11) drehbar gelagert wird, wobei der Durchbruch (16) so ausgebildet wird, dass das dritte Zahnrad (4) zwischen dem ersten und dem zweiten Zahnrad (2, 3) angeordnet wird und die dritte Verzahnung (9) im kämmenden Eingriff mit der ersten und der zweiten Verzahnung (4, 7) gebracht wird, wobei als Lagerelement (12) ein Wälzlager mit einem Wälzlagerinnenring eingesetzt wird, und über Reibschluss zwischen dem Wälzlagerinnenring und der Wand (17) einerseits und zwischen dem Wälzlagerinnenring und der Schraubenmutter (15) oder einer zwischen der Schraubenmutter (15) und dem Wälzlagerinnenring angeordneten Unterlagscheibe andererseits der Wälzlagerinnenring fix positioniert wird, **dadurch gekennzeichnet, dass** der Durchbruch (16) mit einem Durchmesser (19) hergestellt wird, der passgenau einem Außendurchmesser (20) des Lagerbolzens (11) entspricht, und dass zwischen dem Lagerelement (12) und dem Lagerbolzen (11) ein Federelement (21) angeordnet wird, mit dem Zähne (10) der dritten Verzahnung (9) des dritten Zahnrades (4) gegen Zähne (6) der ersten Verzahnung (5) des ersten Zahnrades (2) und Zähne (8) der zweiten Verzahnung (7) des zweiten Zahnrades (3) gedrückt werden, und dass nach der Anordnung des Federelementes (21) die Einheit aus drittem Zahnrad (4), Lagerelement (12) und Federelement (21) mittels einer Schraubenmutter (15) auf dem Lagerbolzen (11) verschraubt wird, sodass der Reibschluss zwischen dem Wälzlagerinnenring und der Wand (17) und zwischen dem Wälzlagerinnenring und der Schraubenmutter (15) oder einer zwischen der Schraubenmutter (15) und dem Wälzlagerinnenring angeordneten Unterlagscheibe hergestellt wird.

7. Verfahren nach Anspruch 6, **dadurch gekennzeichnet, dass** der Durchbruch (16) für den Lagerbolzen (11) in der Wand (17) so positioniert wird, dass sich der Teilkreis der dritten Verzahnung (9) mit den Teilkreisen der ersten und der zweiten Verzahnung (5, 7) schneidet.

## Claims

1. A gear drive (1) comprising a first gear (2) with a first toothing (5), a second gear (3) with a second toothing (7), and a third gear (4) with a third toothing (9), wherein the third gear (4) is arranged between the first and the second gear (2, 3) and the third toothing (9) is engaged in a meshing arrangement with the first and the second toothing (5, 7), wherein furthermore, the third gear (4) is rotatably mounted on a bearing bolt (11) by means of a bearing element (12), and the bearing bolt (11) extends through an opening (16) in a wall (17), wherein the bearing element (12) is designed as a rolling bearing having a rolling bearing with a rolling bearing inner ring, and the rolling bearing inner ring is fixedly positioned by means of a frictional connection between the rolling bearing inner ring and the wall (17) on the one side and between the rolling bearing inner ring and the screw nut (15) or a washer arranged between the screw nut (15) and the rolling bearing inner ring on the other side, **characterized in that** a diameter (19) of the opening (16) is exactly matched to an outer diameter (20) of the bearing bolt (11), so that the bearing bolt (11) is fixed in the opening (16) of the wall (17) so as to be radially unchangeable, and that between the bearing bolt (11) and the bearing element (12), a spring element (21) is arranged, and that a unit made up of third gear (4), bearing element (12), and spring element (21) is screwed onto the bearing bolt (11) by means of a screw nut (15) for creating a frictional connection between the rolling bearing inner ring and the wall (17) and between the rolling bearing inner ring and the screw nut (15) or a washer arranged between the screw nut (15) and the rolling bearing inner ring.

2. The gear drive (1) according to claim 1, **characterized in that** the spring element (21) is designed to be sleeve-shaped.

3. The gear drive (1) according to claim 1 or 2, **characterized in that** the spring element (21) is designed to have a hyperboloid shape.

4. The gear drive (1) according to one of claims 1 to 3, **characterized in that** the spring element (21) has at least one slot (22).

5. The gear drive (1) according to one of claims 1 to 4, **characterized in that** the spring element (21) is connected to the screw nut (15), by means of which the bearing bolt (11) can be affixed to the wall (17).

6. A method for assembling a gear drive (1), comprising a first gear (2) with a first toothing (5), a second gear (3) with a second toothing (7), and a third gear (4) with a third toothing (9), wherein a bearing bolt (11) is pushed through an opening (16) in a wall (17) and the third gear (4), or the third gear (4) is fitted onto the bearing bolt (11), and is rotatably mounted on the bearing bolt (11) by means of a bearing element (12), wherein the opening (16) is designed such that the third gear (4) is arranged between the first and the second gear (2, 3), and the third toothing (9) is engaged in a meshing arrangement with the first and the second toothing (5, 7), wherein a rolling bearing having a rolling bearing inner ring is used as the bearing element (12), and the rolling bearing inner ring is fixedly positioned by means of a frictional connection between the rolling bearing inner ring and the wall (17) on the one side and between the rolling bearing inner ring and the screw nut (15) or a washer arranged between the screw nut (15) and the rolling bearing inner ring on the other side, **characterized in that** the opening (16) is produced having a diameter (19), which exactly matches an outer diameter (20) of the bearing bolt (11), and that a spring element (21) is arranged between the bearing element (12) and the bearing bolt (11), by means of which teeth (10) of the third toothing (9) of the third gear (4) are pushed against teeth (6) of the first toothing (5) of the first gear (2) and teeth (8) of the second toothing (7) of the second gear (3), and that after the arrangement of the spring element (21), the unit made up of third gear (4), bearing element (12) and spring element (21), is screwed onto the bearing bolt (11) by means of a screw nut (15), so that the frictional connection between the rolling bearing inner ring and the wall (17) and between the rolling bearing inner ring and the screw nut (15) or a washer arranged between the screw nut (15) and the rolling bearing inner ring is established.

7. The method according to claim 6, **characterized in that** the opening (16) for the bearing bolt (11) is positioned in the wall (17) such that the pitch circle of the third toothing (9) intersects the pitch circles of the first and the second toothing (5, 7).

## Revendications

1. Transmission par engrenage (1), comprenant une première roue dentée (2) avec une première denture (5), une deuxième roue dentée (3) avec une deuxième denture (7) et une troisième roue dentée (4) avec une troisième denture (9), la troisième roue dentée (4) étant disposée entre la première et la deuxième roue dentée (2, 3), et la troisième denture (9) étant en prise par engrènement avec la première et la deuxième denture (5, 7), la troisième roue dentée (4) étant en outre supportée en rotation sur une broche de palier (11) au moyen d'un élément de palier (12), et la broche de palier (11) s'étendant à travers une traversée (16) dans une paroi (17), l'élément de palier (12) étant constitué en tant que palier à roulement avec une bague intérieure de palier à roulement et étant positionné de façon fixe par liaison par friction entre la bague intérieure de palier à roulement et la paroi (17) d'un côté et entre la bague intérieure de palier à roulement et l'écrou (15) ou une rondelle disposée entre l'écrou (15) et la bague intérieure de palier à roulement de l'autre côté, **caractérisée en ce qu'**un diamètre (19) de la traversée (16) est adapté, par un ajustement précis, à un diamètre extérieur (20) de la broche de palier (11) de telle sorte que la broche de palier (11) est bloquée de façon radialement invariable dans la traversée (16) de la paroi (17), et **en ce qu'**un élément à ressort (21) est disposé entre la broche de palier (11) et l'élément de palier (12), et **en ce que** l'unité composée de la troisième roue dentée (4), de l'élément de palier (12) et de l'élément à ressort (21) est vissée au moyen d'un écrou (15) sur la broche de palier (11) pour la constitution de la liaison par friction entre la bague intérieure de palier à roulement et la paroi (17) et entre la bague intérieure de palier à roulement et l'écrou (15) ou une rondelle disposée entre l'écrou (15) et la bague intérieure de palier à roulement.

2. Transmission par engrenage (1) selon la revendication 1, **caractérisée en ce que** l'élément à ressort (21) est constitué en forme de douille.

3. Transmission par engrenage (1) selon la revendication 1 ou 2, **caractérisée en ce que** l'élément à ressort (21) est constitué en forme d'hyperboloïde.

4. Transmission par engrenage (1) selon l'une des revendications 1 à 3, **caractérisée en ce que** l'élément à ressort (21) comporte au moins une fente (22).

5. Transmission par engrenage (1) selon l'une des revendications 1 à 4, **caractérisée en ce que** l'élément à ressort (21) est raccordé à l'écrou (15) avec lequel la broche de palier (11) peut être fixée sur la paroi (17).

6. Procédé de montage d'une transmission par engrenage (1) comprenant une première roue dentée (2) avec une première denture (5), une deuxième roue dentée (3) avec une deuxième denture (7) et une troisième roue dentée (4) avec une troisième denture (9), une broche de palier (11) étant fichée à travers une traversée (16) d'une paroi (17) et la troisième roue dentée (4), ou la troisième roue dentée (4) étant enfichée sur la broche de palier (11), et étant supportée de façon rotative au moyen d'un élément de palier (12) sur la broche de palier (11), la traversée (16) étant constituée de telle sorte que la troisième roue dentée (4) est disposée entre la première et la deuxième roue dentée (2, 3), et la troisième denture (9) est mise en prise par engrènement avec la première et la deuxième denture (5, 7), un palier à roulement avec une bague intérieure de palier à roulement étant utilisé en tant qu'élément de palier (12) et étant positionné de fixe par liaison par friction entre la bague intérieure de palier à roulement et la paroi (17) d'un côté et entre la bague intérieure de palier à roulement et l'écrou (15) ou une rondelle disposée entre l'écrou (15) et la bague intérieure de palier à roulement de l'autre côté, **caractérisé en ce que** la traversée (16) est réalisée avec un diamètre (19) qui correspond, par un ajustement précis, à un diamètre extérieur (20) de la broche de palier (11), et **en ce que**, entre l'élément de palier (12) et la broche de palier (11), il est disposé un élément à ressort (21) avec lequel des dents (10) de la troisième denture (9) de la troisième roue dentée (4) sont pressées contre des dents (6) de la première denture (5) de la première roue dentée (2) et des dents (8) de la deuxième denture (7) de la deuxième roue dentée (3), et **en ce que**, après la disposition de l'élément à ressort (21), l'unité composée de la troisième roue dentée (4), de l'élément de palier (12) et de l'élément à ressort (21) est vissée au moyen d'un écrou (15) sur la broche de palier (11) de telle sorte que la liaison par friction est réalisée entre la bague intérieure de palier à roulement et la paroi (17) et entre la bague intérieure de palier à roulement et l'écrou (15) ou une rondelle disposée entre l'écrou (15) et la bague intérieure de palier à roulement.

7. Procédé selon la revendication 6, **caractérisé en ce que** la traversée (16) pour la broche de palier (11) est positionnée dans la paroi (17) de telle sorte que le cercle partiel de la troisième denture (9) et les cercles partiels de la première et de la deuxième denture (5, 7) se coupent.
